# EUROPÄISCHE PATENTSCHRIFT

(11) **EP 0 753 286 B1**
(45) Veröffentlichungstag und Bekanntmachung des Hinweises auf die Patenterteilung: **06.06.2001**
(21) Anmeldenummer: 96110719.0
(22) Anmeldetag: 02.07.1996
(51) Int. Cl.: A61C 1/00, A61C 1/18

(54) **Verbindungsvorrichtung von zwei axial aneinanderfügbaren zahnärztlichen Handstückteilen**
Connecting device for two axially interconnectable dental handpiece components
Système de blocage entre deux parties interconnectables d'une pièce à main pour l'art dentaire

(30) Priorität: 14.07.1995 DE 19525755
(43) Veröffentlichungstag der Anmeldung: 15.01.1997
(73) Patentinhaber: Sirona Dental Systems GmbH, 64625 Bensheim (DE)
(72) Erfinder: Stein, Ulf, 64689 Grasellenbach (DE); Bierbaum, Thomas, Dipl.-Ing. (FH), 64653 Lorsch (DE)
(74) Vertreter: Sommer, Peter

(56) Entgegenhaltungen:
- EP-A- 0 013 714
- DE-A- 2 533 189
- US-A- 4 792 304

## Beschreibung

Die Erfindung bezieht sich auf ein zahnärztliches Handstück gemäß dem Oberbegriff von Anspruch 1.

Zahnärztliche Handstücke, wie Turbinenhandstücke, motorbetriebene Winkelstücke, Spritzhandstücke, bestehen in der Regel aus mehreren Teilen, die durch eine Schraub- oder Steck-/Rastverbindung miteinander verbunden sind. Beispiele für eine solche Verbindung sind aus der US-PS 4 792 304 oder DE-2 533 189 bekannt. Im einen Fall wird die Verbindung von Kopfteil mit dem Griffteil des Handstückes durch eine von außen entriegelbare Rastverbindung hergestellt, im anderen Fall durch eine konzentrisch zum Handstück angeordnete Überwurfmutter, mit der die beiden Handstückteile verschraubt werden.

Aus der EP-0 013 714 A1 ist ferner eine Vorrichtung zur lösbaren Verbindung von zwei axial miteinander kuppelbaren zahnärztlichen Handstückteilen bekannt, bei der die zu verbindenden Teile axiale, gegen Verdrehung sichernde Führungsglieder aufweisen und Kupplungsglieder enthalten, die bei axialem Zusammenschieben der Teile miteinander in Eingriff kommen. Es sind ferner Mittel vorhanden, die bei in Eingriff befindlichen Kupplungsgliedern auf diese eine von wenigstens einem Federelement erzeugte Kraft ausüben, welche die beiden Teile selbsttätig kraftschlüssig aneinanderdrückt. Die Anordnung ist so getroffen und die Federkraft so gewählt, daß die Verbindung durch axialen Zug entgegen der Federkraft wieder lösbar ist.

Der im Anspruch 1 angegebenen Erfindung liegt die Aufgabe zugrunde, eine Vorrichtung der eingangs genannten Art zu schaffen, mit der die Handstückteile nicht selbsttätig, sondern von Hand mit individuell einstellbarer Kraft formschlüssig aneinandergekuppelt werden können, und mit der die Montage der Handstückteile in möglichst einfach zu handhabender Weise, trotzdem mit einem hohen Sicherheitsgrad, möglich ist, und zwar unter Vermeidung von aus hygienischer Sicht unerwünschten äußeren zusätzlichen Verbindungsteilen, wie sie nach dem eingangs genannten Stand der Technik notwendig sind.

Die nachfolgend näher erläuterte erfindungsgemäße Vorrichtung beinhaltet die Vorteile einer vereinfachten Montage, d.h. die miteinander verbindbaren Handstückteile sind sehr einfach zu 'paketieren'; es ist kein Spezialwerkzeug notwendig, wodurch die Montage und Demontage der Teile selbst durch den Anwender (Zahnarzt) möglich ist. Nachdem an der äußeren Fläche des Handstückes keine zusätzlichen Verbindungselemente, wie Überwurfmuttern od.dgl., notwendig sind, ergibt sich eine glatte Oberfläche und dadurch eine bessere Hygiene. Bildet man das Spannelement in sich federnd aus, so lassen sich durch das federartige Zusammenziehen des Elements relativ große Spannkräfte mit hoher Stabilität erzielen. Des weiteren ist der Ausgleich von Bauteil-Toleranzketten sehr gut möglich, was sich insbesondere dann auswirkt, wenn mehr als zwei Handstückteile aneinandergefügt werden müssen. Ein weiterer Vorteil ist darin zu sehen, daß eine Verspannung der Handstückteile an sich über einen beliebigen Winkel möglich ist.

Anhand der Zeichnung wird ein Ausführungsbeispiel der Erfindung näher beschrieben. Es zeigen:
Figur 1 ein zahnärztliches Hand- und Winkelstück, teilweise im Schnitt,
Figur 2 das Handstück nach Figur 1 in einer anderen Schnittdarstellung,
Figur 3 das verwendete Spannelement in einer Draufsicht.

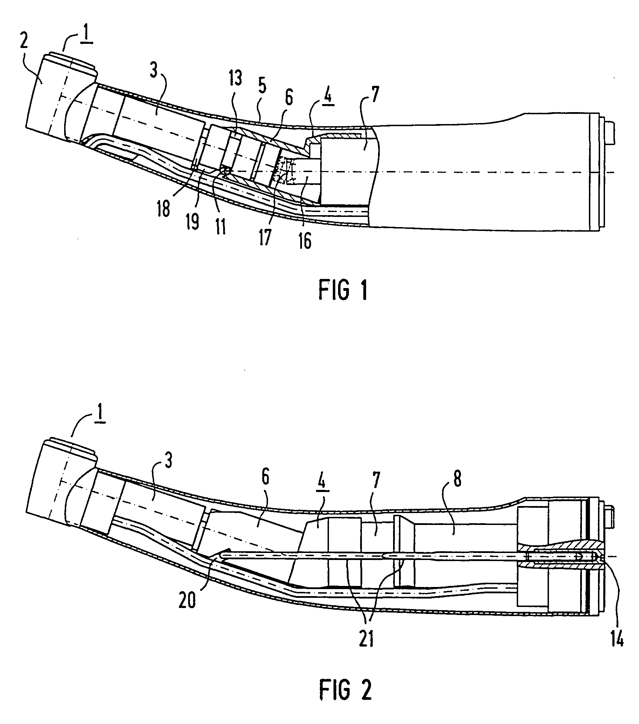

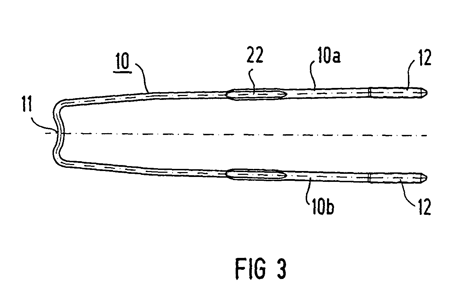

Die Figur 1 zeigt ein zahnärztliches Hand- und Winkelstück, welches in bekannter Weise ein Kopfteil 1 mit einem Kopfgehäuse 2 zur Aufnahme eines (nicht dargestellten) rotierenden Werkzeuges und ein sich an das Kopfgehäuse anschließendes Halsteil 3 enthält. Das Kopfteil 1 ist auswechselbar in einer allgemein mit 4 bezeichneten Innenhülse des Handstückes gehaltert. Den äußeren Abschluß bildet eine Außenhülse 5. Die Innenhülse 4 besteht aus einer Knickstückhülse 6, einer Getriebeeinheit 7 und einer Kupplungsbuchse 8 (Fig. 2). Um das Kopfteil mit der Innenhülse, also mit den Teilen 6, 7 und 8 funktionsgemäß in einfach handhabbarer Weise verbinden zu können, ist die nachfolgend näher erläuterte Vorrichtung vorgesehen. Diese umfaßt ein bügelförmiges Spannelement 10, welches in Figur 3 in einer Draufsicht dargestellt ist. Das Spannelement kann ein gebogener Draht mit beliebigem Querschnitt (rund, oval, rohrförmig, mehrkantig) sein, welcher am abgebogenen Ende eine nach innen gezogene Wölbung 11 aufweist und an den Schenkelenden mit einem Außengewinde 12 versehen ist. Im montierten Zustand (Fig. 1 und 2) greift das nach innen gezogene Ende 11 des Spannelements 10 in eine im Halsteil 3 vorgesehene Ringnut 13 (Fig. 1) ein. Die beiden Schenkelenden korrespondieren mit in der Kupplungsbuchse 8 vorgesehenen Spannschrauben 14. Durch Drehen der Spannschrauben, die in der Kupplungsbuchse gegen einen Anschlag anliegen, kann das Spannelement 10 im Sinne einer axialen Verspannung der Teile festgezogen werden.

Nachdem sowohl in der Innenhülse als auch im Kopfteil Triebwellen 16 vorgesehen sind, die im Knickbereich durch eine Verzahnung 17 mit definiertem Spiel kämmen müssen, ist es notwendig, die beiden Handstückteile 1 und 4 unabhängig von der Spannkraft in definierter Position zu halten. Hierzu enthält das Halsteil 3 ein in einer weiteren, nicht näher bezeichneten Nut eingesetztes Element 18, gegen das das stirnseitige Ende 19 der Knickstückhülse 6 beim Anziehen des Kopfteiles gedrückt wird. Damit ist ein definierter Anschlag gebildet, der unabhängig von der aufgewendeten Spannkraft der Spannvorrichtung ist.

Um das Ein- und Aushaken des bügelförmigen Spannelements 10 zu erleichtern, ist die Knickstückhülse 6 mit einem schräg verlaufenden Schlitz 20 versehen (Fig. 2). Um beim Anziehen des Spannelements ein Verdrehen der Bügelschenkel 10a und 10b zu vermeiden, enthält die Knickstückhülse 6 und die Kupplungsbuchse 8 einen etwa mittig verlaufenden Führungsschlitz 21 und in diesem Bereich eine Anquetschung 22, die dem Bügel eine vom runden Querschnitt abweichende Form verleiht. Diese Anquetschung 22 stützt die beim Drehen der Spannschrauben 14 auftretenden Torsionskräfte im Spannelement ab.

Abschließend sei darauf hingewiesen, daß im Rahmen der Erfindung auch Abwandlungen möglich sind. So kann beispielsweise anstelle des bügelförmigen Spanndrahtes auch ein Zugseil oder eine Gliederkette verwendet werden, die entsprechend gespannt wird. Auch die Spannung mit einem Exzenterhebel oder mit Hilfe einer Schelle ist: möglich. Des gleichen ist auch eine zentrale Spannung mit nur einer Spannschraube möglich, wenn dies aus Platzgründen machbar ist.

## Patentansprüche

1. Zahnärztliches Handstück mit wenigstens zwei axial aneinanderfügbaren und formschlüssig miteinander in Eingriff bringbaren zahnärztlichen Handstückteilen (3, 4) **gekennzeichnet durch** ein im wesentlichen achsparallel innerhalb einer Außenhülse (5) verlaufendes, flexibles Spannelement (10), welches am einen Handstückteil (3) in definierter Lage so anlegbar ist, daß sich die im Inneren eines Außenhülse (5) befindenden Handstückteile (3, 4) mittels einem am anderen Handstückteil (4) angeordneten Stellmittel (14) axial miteinander verspannen lassen.

2. Zahnärztliches Handstück nach Anspruch 1, **dadurch gekennzeichnet,** daß das Spannelement (10) biegeelastisch ausgebildet ist.

3. Zahnärztliches Handstück nach Anspruch 2, **dadurch gekennzeichnet**, daß als Spannelement (10) ein bügelförmiger Draht vorgesehen ist, wobei die Drahtenden mit einem Gewinde (12) versehen sind, welches mit einer am anderen Teil (4) angeordneten Spannschraube (14) zusammenwirkt.

4. Zahnärztliches Handstück nach Anspruch 3, **dadurch gekennzeichnet,** daß die beiden Bügelschenkel (10a, 10b) zur Verdrehsicherung seitlich eine Ausquetschung (22) aufweisen.

5. Zahnärztliches Handstück nach einem der vorhergehenden Ansprüche, **dadurch gekennzeichnet**, daß in den beiden Handstückteilen (3, 4) Triebwellen (16) gelagert sind, deren im montierten Zustand miteinander in Eingriff befindliche Zahnräder (17) mit definiertem Spiel kämmen, und daß zur Festlegung des Spieles das eine Teil (3) mit einem Anschlag (18) versehen ist, gegen den das andere Teil (4) mit Hilfe des Spannelements (10) gedrückt wird.

6. Zahnärztliches Handstück nach Anspruch 5, **dadurch gekennzeichnet,** daß das den Anschlag (18) aufweisende eine Teil (3) ein Kopfteil (3) eines zahnärztlichen Handstückes ist welcher mit einer in einer Griffhülse (5) des Handstückes gehalterten Innenhülse (4) verbindbar ist.

## Claims

1. Dental handpiece having at least two dental handpiece parts (3, 4) which can be joined axially to one another and can be brought into form-fitting engagement with one another, characterized by a flexible clamping element (10) which runs in an essentially axis-parallel manner within an outer sleeve (5) and can be fitted in a defined position on one handpiece part (3) such that the handpiece parts (3, 4), which are located in the interior of an outer sleeve (5), can be braced axially with one another by an actuating means (14) arranged on the other handpiece part (4).

2. Dental handpiece according to Claim 1, characterized in that the clamping element (10) is of flexurally elastic design.

3. Dental handpiece according to Claim 2, characterized in that the clamping element (10) provided is a clip-like wire, the wire ends being provided with a thread (12) which interacts with a clamping screw (14) arranged on the other part (4).

4. Dental handpiece according to Claim 3, characterized in that, laterally, the two clip legs (10a, 10b) have a pinched formation (22) for rotation prevention.

5. Dental handpiece according to one of the preceding claims, characterized in that mounted in the two handpiece parts (3, 4) are drive shafts (16) of which the gear wheels (17), which are in engagement with one another in the installed state, mesh with defined play, and in that, in order to define the play, one part (3) is provided with a stop (18) against which the other part (4) is pressed with the aid of the clamping element (10).

6. Dental handpiece according to Claim 5, characterized in that the one part (3), which has the stop (18), is a head part (3) of a dental handpiece, which can be connected to an inner sleeve (4) secured in a grip sleeve (5) of the handpiece.

## Revendications

1. Pièce à main de dentisterie comportant au moins deux parties (3, 4) de pièce à main de dentisterie pouvant être assemblées axialement et mises en prise l'une avec l'autre par complémentarité de formes, caractérisée par un élément (10) de blocage flexible, qui s'étend sensiblement parallèlement à un axe à l'intérieur d'une douille (5) extérieure et qui peut être appliqué à une partie (3) de pièce à main en une position définie de telle manière que les parties (3, 4) de pièce à main se trouvant à l'intérieur d'une douille (5) extérieure peuvent être bloquées axialement l'une avec l'autre au moyen d'un moyen (14) de déplacement monté sur l'autre partie (4) de la pièce à main.

2. Pièce à main de dentisterie suivant la revendication 1, caractérisée en ce que l'élément (10) de blocage est réalisé de manière à être élastique en flexion.

3. Pièce à main de dentisterie suivant la revendication 2, caractérisée en ce qu'il est prévu comme élément (10) de blocage un fil métallique en forme d'étrier, les extrémités du fil étant munies d'un filetage (12) qui coopère avec une vis (14) de blocage montée sur l'autre partie (4).

4. Pièce à main de dentisterie suivant la revendication 3, caractérisée en ce que les deux branches (10a, 10b) de l'étrier comportent latéralement un méplat (22) pour empêcher toute torsion.

5. Pièce à main de dentisterie suivant l'une des revendications précédentes, caractérisée en ce qu'il est monté dans les deux parties (3, 4) de pièce à main des arbres (16) de commande dont les roues (17) dentées se trouvant en prise les unes avec les autres à l'état monté engrènent en ayant un jeu défini, et en ce que, pour fixer le jeu, l'une (3) des parties est munie d'une butée (18) contre laquelle l'autre partie (4) est repoussée à l'aide de l'élément (10) de blocage.

6. Pièce à main de dentisterie suivant la revendication 5, caractérisée en ce que l'une (3) des parties comportant la butée (18) est une partie (3) de tête d'une pièce à main de dentisterie qui peut être reliée à une douille (4) intérieure fixée dans une douille (5) de préhension de la pièce à main.
